# EUROPEAN PATENT APPLICATION

(11) **EP 1 357 682 A1**
(43) Date of publication of application: **29.10.2003**
(21) Application number: 02252864.0
(22) Date of filing: 23.04.2002
(51) Int. Cl.: H04B 10/00

(54) **Module apparatus for optical communication and circuit pack therefor**

(71) Applicant: Agilent Technologies, Inc. - a Delaware corporation -, Palo Alto, CA 94303-0870 (US)
(72) Inventor: Chown, David Philip, Ipswich, Suffolk IP7 6DE (GB); Crouch, Jeremy Paul, Stowmarket, Suffolk IP4 6JB (GB); Wilkinson, Stuart, Manningtree, Essex CO11 2SX (GB); Bardsley, Richard, Andover, Hampshire SP10 2JQ (GB)
(74) Representative: Coker, David Graeme

(57) **Abstract**

Apparatus (1) for optical communications, the apparatus being adapted for mounting on a circuit pack (2) including, as a single, self-contained module (6):
- circuitry comprising at least one of an optical receiver for converting a received optical signal into a received electrical signal and an optical transmitter for converting an electrical transmission signal into an optical transmission signal,
- at least one electrical connector (130) for conveying at least one of said received electrical signal and said electrical transmission signal, and
- at least one optical connector (7,17) for conveying at least one of said received optical signal and said optical transmission signal.

## Description

In telecommunication systems the performance of the system is characterised by the Bit Error Ratio (BER). This is the probability that a pulse is interpreted incorrectly, i.e. a pulse signifying a '1' is interpreted as a '0' and vice versa. The BER depends on the Signal to Noise Ratio (SNR) of the received signal and the decision level of the electronic circuit which determines whether a received pulse is a '1' or a '0'.

The SNR is determined by source characteristics and system impairments. System impairments may include amplified spontaneous emission noise, chromatic dispersion, polarisation mode dispersion, fibre nonlinearity and receiver noise, where the receiver is the photodetector and its associated electronics prior to the decision circuit. The desired, smallest, BER can be obtained by setting the decision level to an optimum value.

Methods for determining the optimum decision level are well known in the art, as exemplified e.g. by Bergano, N.S.; Kerfoot, F.W.; Davidson, C.R. "Margin measurements in optical amplifier system", *IEEE Photonics Technology Letters, Volume 5, Issue 3, 1993, Pages 304-306* or US-A-4 823 360.

In the field of optical communications, the level of precision and reliability required by Network Equipment Manufacturers (NEMs) depends upon the market in which optoelectronic equipment is being sold. Consequently, in the case of the so-called "access network" market, precision and reliability do not have to be at a level as high as required by the so-called "long-haul" market.

A particular example of the different requirements for precision is the setting of the decision level simply to a mean power level in access systems and the use of optimised decision levels in long-haul systems.

This use of the mean power level in access systems is possible because these systems do not use amplifiers and use PIN diodes as photodetectors, thus the characteristics of the SNR are suitable for a simple mean power decision level.

Another difference is the practice in the long-haul market of procuring individual components, for example avalanche photodetectors (APDs), amplifiers and comparators and assembling receivers and decision circuits from them. This obviously requires that the NEM must have the skill and resources to assemble the components into, for example, the receiver.

In the access market the practice is to buy from Original Equipment Manufacturers (OEMs) optoelectronic modules which generally have digital inputs and outputs which do not require the NEM to have significant knowledge of the components inside the module.

The so-called metropolitan market borrows some quality and reliability requirements from the long-haul market and so procurers of optoelectronic equipment for NEMs have tended to follow the practice of the long-haul market and procure individual components as opposed to complete single modules, for example, transmitter or transceiver modules. The rationale of NEMs could be that no single manufacturer offers the best of all optoelectronic components. Consequently, components that when assembled form, for example, an optoelectronic transmitter are obtained from different sources.

In the prior art, the circuit of, for example, US-A-4 823 360 is assembled from discrete components individually attached to a printed wiring board, often known as a 'circuit pack'.

The photodetector will also be assembled to the circuit pack. Typically the photodetector will be packaged in a package with a fibre pigtail. The integrated circuits and passive components will be in industry standard packages.

The integrated circuits and passive components can be attached to the circuit pack using standard industrial techniques, such as wave soldering, but pigtailed packages are not compatible with this technique as the fibre pigtails cannot be handled by standard automatic machinery and are adversely affected by the high temperature of the process.

Therefore these components have to be manually attached as a subsequent operation which is slow and expensive. The large number of discrete components occupy a large area of the circuit pack, so that many circuit packs will be required on systems with large numbers of receivers.

Where the level of precision and reliability is such that obtaining all components from a single source is merited, the application of the components is cost driven, or particularly where the NEM does not have the skill and resources to assemble the components it has been known for NEMs to procure single modules comprising a number of components forming, for example, a transmitter module or a transceiver module.

Typically, such modules comprise an electronic circuit board to which the individual components of the module are soldered. The modules can comprise pins for soldering into the electronic circuit card, or circuit pack, manufactured by the NEM, in order to enable communication of electrical signals between the module and the circuit pack. The systems comprising these circuit packs, populated by optoelectronic modules, are then, typically, sold by the NEM to Network Service Providers (NSPs) to form part of an optical communications network.

It is also known to provide such modules in a so-called "Plug & Play" format for easy installation and replacement. In both of the above examples, the module can be provided with an optical connector, such as a so-called "LC" connector, for coupling to fiber-optic patch cords having a compatible complementary connector attached to one end thereof.

However, due to the prejudice of the need to provide the components forming the module from different sources, such features are not offered by modules for "high-end" metropolitan applications, such as for WDM communications systems.

It is thus an object of this invention to provide module apparatus overcoming the drawbacks of the prior art while providing a high level of precision, reliability and performance.

According to the present invention, such an object is achieved by means of module apparatus having the features set forth in the annexed claims. The invention also relates to the corresponding circuit pack.

The invention overcomes the disadvantages of time consuming and difficult assembly by providing a compact module in which are integrated all the building blocks of the receiver, including means for setting the decision level, and optionally a transmitter to form a transceiver or transponder.

The module has an electrical connector which connects to a corresponding connector on the circuit pack and an optical connector (for a receiver module) or connectors (for a transceiver) which allow optical connection to be made to the telecommunication system by a patch cord.

The decision level can be set either by including in the module a circuit such as that of US-A-4 823 360 or by providing a signal to a pin on the module from a circuit on the circuit pack. Alternatively the decision level can be set by including in the module a microprocessor which receives an instruction over a digital bus from a circuit on the circuit pack.

The connector on the circuit pack is compatible with standard industrial techniques, such as wave soldering.

The module has a 'hot pluggable' design which allow it to be inserted into the connector on the circuit pack without powering down the circuit pack. This allows circuit packs to be populated with connectors, integrated circuits and passive components and assembled into racks leaving the addition of the modules until a late stage. It is even possible to ship racks not fully populated with modules to Network Service Providers to allow them to add modules later thus reducing the initial outlay.

The invention thus has the advantages of:
- inexpensive manufacturing
- compact size
- variable decision level
- easy and quick installation and removal from a circuit -pack, and
- reduced initial outlay

The invention will now be described, by way of example only, with reference to the accompanying drawings, wherein:
Fig. 1, includes three portions, indicated 1a, 1b, and 1c showing three eye diagrams;
Fig. 2 shows a transceiver module;
Fig. 3 shows a transceiver module partially inserted into a circuit pack;
Fig. 4 shows a schematic of a module in which the decision level is provided by an external signal;
Figs. 5 and 6 show schematics of modules in which the decision level is provided by a microprocessor which receives a command over a data bus; and
Fig. 7 shows a schematic of a module in which the decision level is generated by an internal circuit.

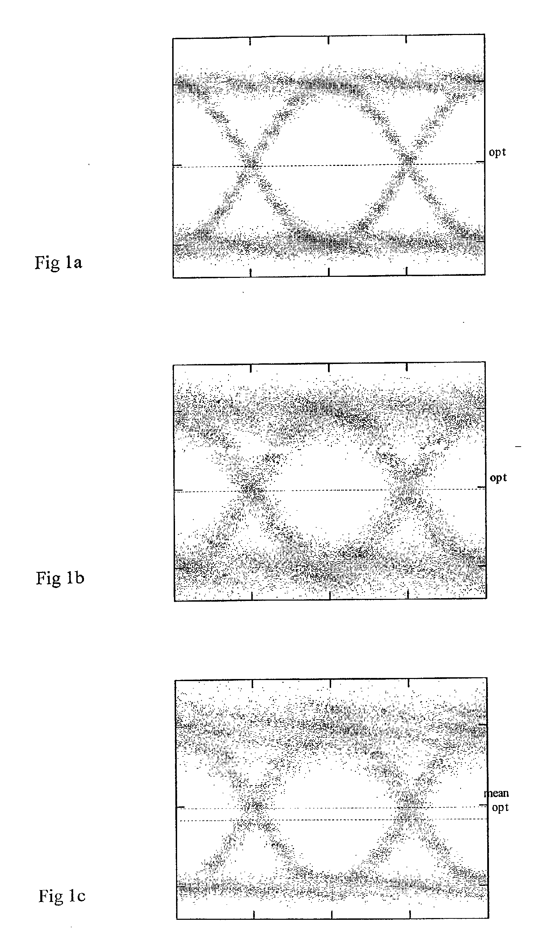

In the drawings, figures 1a and 1b show symmetrical "eye diagrams" with different SNRs. In both cases a simple mean power decision level, denoted by the dashed line 'opt' is appropriate.

In Fig 1c the noise is asymmetric as in an amplified system. The mean power level denoted by the dashed line 'mean' is somewhat closer to the lowest 'ones' than the highest 'zeros' and therefore is not optimum. The dashed line 'opt', slightly below 'mean' will give a lower BER.

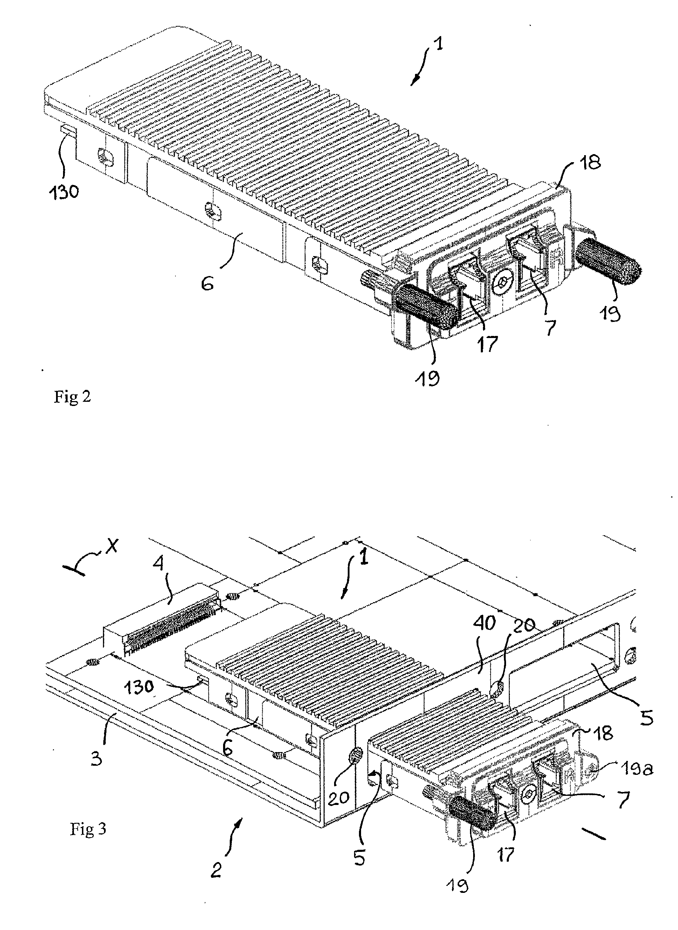

In figures 2 and 3, reference numeral 1 designates module apparatus adapted for mounting on a so-called circuit pack designated 2 and partly shown in figure 3 only.

Circuit pack 2 is essentially comprised of a base plate 3 having mounted thereon an electrical connector 4 whose function will be described in greater detail in the following.

Extending from base plate 3 according to a general L-shaped arrangement is a fixing wall 40 having one or more windows or apertures 5 adapted for receiving a respective module 1 as a result of module 1 being inserted into and caused to slide through window 5.

In the exemplary embodiment shown, aperture or apertures 5 have a rectangular shape complementary to the rectangular cross-section of a casing 6 of module 1. In the embodiment shown, casing 6 has a parallelepiped shape. Such a shape of casing 6 and - correspondingly - the shape of aperture or apertures 5 are in no may mandatory, even though these correspond to a presently preferred choice.

Module apparatus 1 essentially comprises a single, self-contained module adapted to be mounted on circuit pack 2.

Apparatus 1 integrates all the building blocks of an optical receiver, including means for setting the decision level (as better described in the following) and optionally an optical transmitter. Combination within the same module of an optical receiver and transmitter gives rise to a so-called transceiver or transponder.

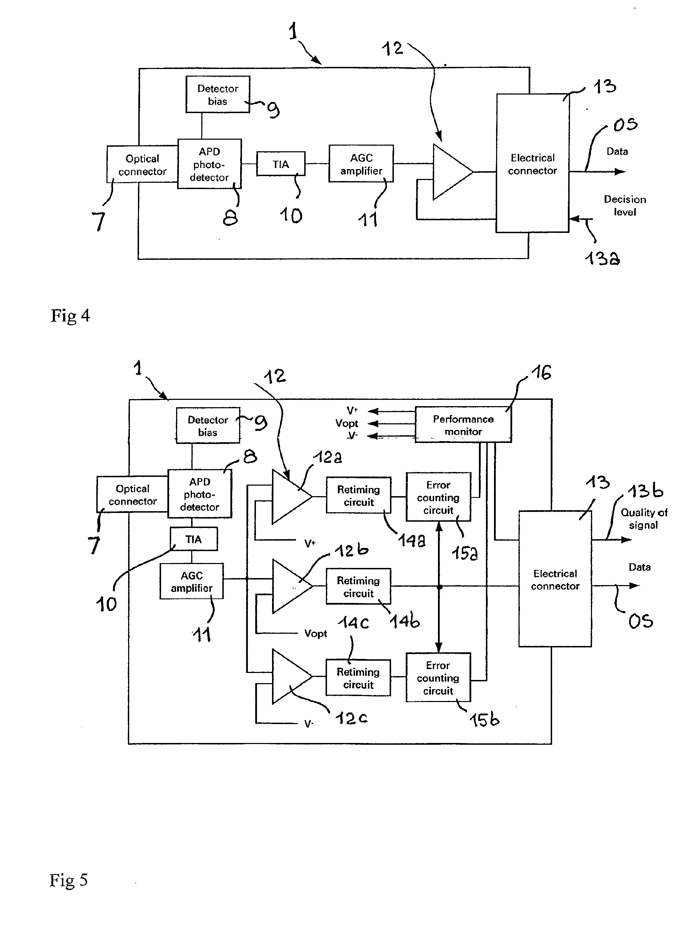

The circuit diagrams of figures 4 to 7 show typical embodiments of circuit arrangements adapted to be housed in module 1.

In figures 4 to 7, reference 7 designates an optical connector adapted for conveying (e.g. receiving) a received optical signal (which may be of the WDM or DWDM type) to be fed to a photodetector 8. This is typically comprised of an avalanche photodetector (APD) having associated therewith a detector bias control circuit 9.

The electrical signal generated as a result of opto-electrical conversion in photodetector 8 is fed to an amplifier stage usually comprised of a transimpedance amplifier (TIA) 10 and a further amplifier stage 11 performing an automatic gain control (AGC) function.

The electrical signal thus amplified is fed to a comparator circuit 12, which may be a limiting amplifier, to be subjected to a decision step by being compared against a decision level.

In the embodiment shown in figure 4, the decision level of comparator 12 can be adjusted as a function of an external signal provided (in a known manner e.g. from a circuit - not shown - on circuit pack 2) on an input line 13a.

Line 13a is usually included in an electrical connector 13 that permits the electrical signal resulting from the decision step (this is typically a two-level logical signal comprised of "high" and "low" levels, that is "1s" and "0s", or vice-versa) to be conveyed (i.e. transmitted) from module 1 in the form of an output data signal OS.

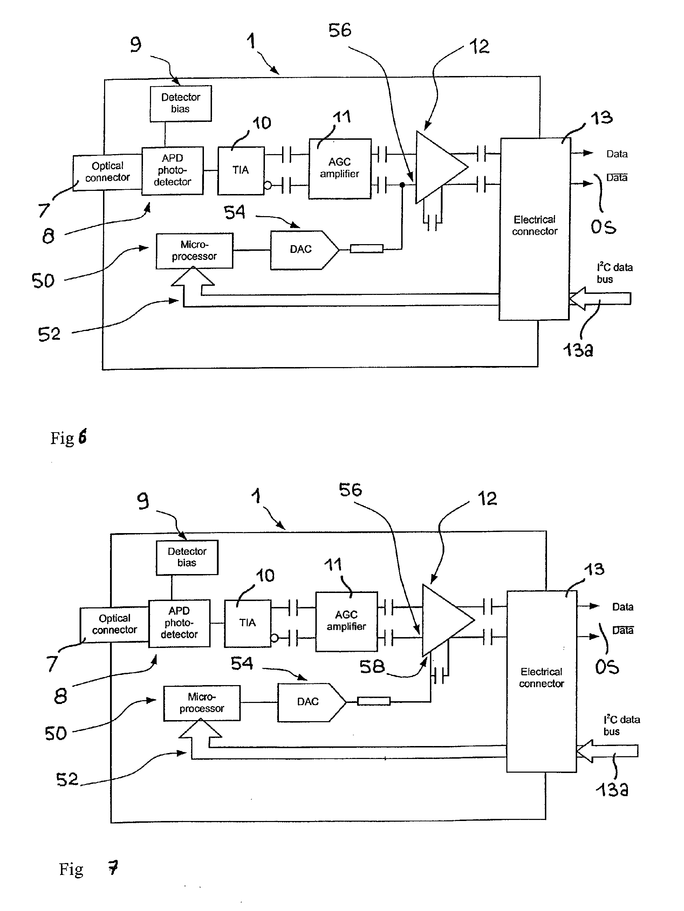

In alternative embodiments shown in figures 5 and 6 the decision level of comparator 12 can be adjusted as a function of a signal provided by a microprocessor 50 provided within the module 1, microprocessor 50 receiving an external digital signal, for example via a data bus 52, for example an I²C bus, from a circuit - not shown - on circuit pack 2. Connection for data bus 52 is usually included in the electrical connector 13 (line or lines 1a). Microprocessor 50 provides a digital signal to a digital to analogue converter (DAC) 54 which provides an analogue signal to the comparator 12.

In the embodiment of figure 5 the analogue signal is combined with a data signal from the AGC amplifier 11 at an input 56 of the comparator comprised of limiting amplifier 12, so that the decision level is varied by offsetting one of the inputs to the limiting amplifier.

In the embodiment of figure 6 the analogue signal influences the DC offset compensation of comparator 12 at a DC offset compensation input 58 of comparator 12.

In the alternative embodiment shown in Figure 7, the circuitry for selectively setting the decision level is included in module 1.

The circuitry in question is based on the solution described in US-A-4 823 360.

In such an embodiment, in the place of comparator circuit 12 of the embodiment of figure 4 three comparators 12a, 12b, 12c are provided having respective thresholds V+, Vopt and V-.

Cascaded with comparators 12a, 12b, 12c are retiming circuits 14a, 14b, and 14c.

The output of retiming circuit 14b is fed towards electrical connector 13 as the output data stream OS.

The output signal from circuit 14b is also fed to two error counter circuits 15a and 15b that are fed with the output signals of retiming circuits 14a and 14b, respectively.

The output signals from error counting circuits 15a and 15b are fed to a performance monitor block 16.

Block 16 generates the threshold levels V+, Vopt, and V- for comparators 12a, 12b and 12c as well as "quality of signal" information that is fed towards connector 13 to be output from module 1 via an output line 13b included in connector 13.

Circuit arrangements for optical transmitters to be possibly associated with the optical receiver arrangement shown in figures 4 to 7 are well known in the art and do not require to be described in detail here.

In the case such a transmitter is present, a further optical connector (designated 17 in figures 2 and 3) is provided at the "front" end or side of casing 6 of module 1. Connector 17 enables transmission from module 1 of the optical transmission signal generated in the transmitter as a result of an electrical transmission signal been fed to module 1 via e.g. electrical connector 13.

Optical connectors 7 and 17 are preferably provided at the front end of module 1 to allow optical connection to be made to the respective telecommunication system by a patch cord.

Conversely, electrical connector 13 is preferably provided at the back or rear end of module 1, connector 13 having electrical connection formations such as pins 130 adapted for engaging connector 4 provided on circuit pack 2.

This preferably occurs as a result of module 1 being mounted on circuit pack 2 by inserting casing 6 into a respective aperture 5 in fixing wall 40 and causing it to slide therethrough until the complementary formations of connectors 4 and 13 are brought to a mutual engagement position.

Preferably, connector 4 on circuit pack 1 is compatible with standard industrial techniques, such as wave soldering.

Module 1 thus has a so-called "hot pluggable" design which allows it to be inserted to its final mounting position onto circuit pack 2 without having to power down the circuit pack. This allows circuit pack 2 to be populated with connectors, integrated circuits and passive components and assembled into racks leaving the addition of the modules until a late stage. It is even possible to ship racks not fully populated with modules while permitting modules to be added at a later stage thus reducing the initial outlay.

Such a result is preferably achieved by choosing the shape of casing 6 in such a way that it exhibits at least one main direction of extension (indicated X in figure 3) - corresponding to the direction along which the complementary connecting formations of connectors 4 and 13 may be brought to their mutual engagement position.

Preferably, the length of casing 6 (namely the distance between its front and its back ends) and/or the location of connector 4 on circuit pack 2 are chosen in such a way that a collar formation or flange 18 provided at the front end of casing 6 and surrounding optical connectors 7 and 17 is brought to an abutment condition against fixing wall 40 when connectors 4 and 13 reach their final mutual engagement condition.

Collar or flange 18 and the periphery of aperture(s) 5 are thus provided with complementary engagement elements that are brought into facing relationship when module 1 is completely inserted to its mounting position into the respective aperture 5.

Such complementary elements are preferably comprised of screws 19 extending through apertures 19a (figure 3) provided in collar or flange 18. Screws 19 are thus adapted to engage corresponding threaded apertures 20 provided at the periphery of aperture 5.

Of course, while the principle of the invention remains the same, the details of construction and the embodiments may widely vary with respect to what has been described and illustrated purely by way of example, without departing from the scope of the present invention as defined by the annexed claims.

## Claims

1. Module apparatus (1) for optical communications, the apparatus being adapted for mounting on a circuit pack (2) and including, as a single, self-contained module:
- circuitry (7 to 16) comprising at least one of an optical receiver for converting a received optical signal into a received electrical signal and an optical transmitter for converting an electrical transmission signal into an optical transmission signal,
- at least one electrical connector (13) for conveying at least one of said received electrical signal and said electrical transmission signal, and
- at least one optical connector (7, 17) for conveying at least one of said received optical signal and said optical transmission signal.

2. The apparatus of claim 1, **characterised in that** said circuitry includes at least an optical detector (8) for detecting said received optical signal based on a decision level, the receiver including at least one decision block (12) having a selectively variable decision level.

3. The apparatus of claim 2, **characterised in that** said at least one electrical connector (13) includes a line (13a) for conveying to the apparatus (1) a signal for determining said decision level.

4. The apparatus of claim 3, **characterised in that** said decision block includes a limiting amplifier (12) and **in that** said decision level is varied by offsetting one of the inputs (56) to said limiting amplifier (12).

5. The apparatus of claim 3, **characterised in that** said decision block includes a limiting amplifier (12) and **in that** said decision level is varied by varying the DC offset compensation (58) of said limiting amplifier (12).

6. The apparatus of any of claims 2 to 5,
**characterised in that** it includes a microprocessor (50) for setting said decision level as a function of a command received over a data bus (52) connected (13a) through said at least one electrical connector (13).

7. The apparatus of claim 2, **characterised in that** said circuitry includes circuitry (12a, 12b, 12c, 14a, 14b, 15a, 15b, 16) for determining said decision level of said decision block (12).

8. The apparatus of claim 7, **characterised in that** said circuitry (12a, 12b, 12c, 14a, 14b, 15a, 15b, 16) for determining the decision level also includes a performance monitor module (16) generating quality of signal information, and **in that** said at least one electrical connector (13) includes a line (13b) for transmitting said information from the module (1).

9. The apparatus of any of the previous claims, **characterised in that** said at least one electrical connector (13) includes electrical connection formations (130) adapted for sliding into an engagement position in a given direction, the module including a casing (6) having at least one main direction of extension (X) corresponding to said given direction, whereby said formations (130) of said at least one electrical connector (13) are brought to said engagement position by sliding said casing (6) along said at least one main direction of extension (X).

10. The apparatus of either claim 1 or claim 9, **characterised in that** said at least one electrical connector (13) and said at least one optical connector (7, 17) are located at opposite ends of said module (1).

11. A circuit pack for mounting the apparatus of any of claims 1 to 10, **characterised in that** it includes:
- a base plate (3) having mounted thereon a further electrical connector (4) for engaging said at least one electrical connector (13) at a mutual engagement position,
- a fixing wall (40) having an aperture (5) for slidingly receiving said apparatus, whereby said apparatus (1) is adapted to be caused to slide through said aperture (5) towards an apparatus mounting position wherein said further electrical connector (4) and said electrical connector (13) are brought to said mutual engagement position.

12. The pack of claim 11, **characterised in that** said fixing wall (40) has fixing elements (20) adapted to be brought into a facing relationship with at least one portion (18) of said apparatus (1) to mount said apparatus (1) onto said circuit pack (2).

13. The pack of claim 12, **characterised in that** said fixing elements include threaded (20) fixing elements.

14. The pack of claim 13, in combination with at least one apparatus (1) according to any of claims 1 to 9, **characterised in that** said apparatus is provided with screw-like coupling elements (19) adapted to selectively engage said threaded fixing elements (20) on said circuit pack.

15. The pack of any of claims 11 to 14 for mounting a plurality of modules according to any of claims 1 to 10, **characterised in that** said pack (2) includes a plurality of said further electrical connectors (4) and a corresponding plurality of said apertures (5) in said fixing wall (40).
